Europäisches Patentamt

(19) European Patent Office

Office européen des brevets

(11) Publication number: **0 008 870**
**B1**

(12) **EUROPEAN PATENT SPECIFICATION**

(45) Date of publication of patent specification: **30.01.85**

(21) Application number: **79301525.6**

(22) Date of filing: **31.07.79**

(51) Int. Cl.⁴: **B 29 C 69/00, B 65 B 7/28, B 65 B 51/14**

(54) **Heat sealing element.**

(30) Priority: **31.07.78 US 929512**

(43) Date of publication of application:
**19.03.80 Bulletin 80/06**

(45) Publication of the grant of the patent:
**30.01.85 Bulletin 85/05**

(84) Designated Contracting States:
**AT BE CH DE FR GB IT LU NL SE**

(56) References cited:
**EP-A-0 001 939**
**DE-A-2 522 119**
**DE-A-2 608 780**
**GB-A- 581 047**
**GB-A-1 251 627**
**US-A-3 864 892**
**US-A-4 050 971**
**US-A-4 062 718**

**RESEARCH DISCLOSURE, No. 169, May 1978**
**"Apparatus for heat-sealing irregular surfaces"**
**pages 84 and 85**

(73) Proprietor: **THE MEAD CORPORATION**
**Mead World Headquarters Courthouse Plaza Northeast**
**Dayton Ohio 45463 (US)**

(72) Inventor: **Brody, Aaron L.**
**1101, Wynterhall Lane**
**Dunwoody, Georgia 30338 (US)**
Inventor: **Archibald, William E.**
**8022, Willow Creek Boulevard**
**Oklahoma City, Oklahoma 73100 (US)**

(74) Representative: **Hepworth, John**
**J.M. Hepworth & Co. Furnival House 14/18 High Holborn**
**London, WC1V 6DE (GB)**

Courier Press, Leamington Spa, England.

## Description

Technical Field

This invention relates to a packaging machine and method whereby sterilized and filled flanged containers are closed by lid stock secured to the flanges of the containers by a heat seal.

Background Art

One known heat sealing means for sealing plastic materials utilizes a heat sealing member which is fluid heated and which includes a body of material of low thermal conductivity and a strip of material of high thermal conductivity in communication with a heat exchange fluid passage formed in the body of low thermal conductivity. This known structure utilizes nonyieldable pressure applying elements and hence is not well adapted for applying a uniform sealing pressure and temperature to areas to be sealed which are of irregular or nonuniform configuration. United States Patent 4,062,718 is representative of this known structure.

Another known structure for sealing covers to containers utilizes a nonyieldable element arranged to apply heat and pressure to the lid of a container and thereby to seal the lid to the container flange and is arranged to cooperate with a yieldable bevelled compressible member against which the container flange rests. In this known arrangement, sealing pressure and temperature are not applied uniformly throughout the sealing area due in part at least to the bevelled or inclined disposition of the sealing surface of the yieldable compressible element. Canadian Patent 957,662 is representative of this known device.

U.S.—A—4,050,971 discloses a sealing device for applying lids to flanged containers in a packing machine which device comprises a sealing head for bonding by application of heat and pressure a lid on to a container. A resiliently deformable membrane is carried by the head and heating means to maintain the membrane within a predetermined temperature range. The arrangement is such that, during sealing, the membrane is resiliently deformed whilst applying heat and pressure so that the lid is bonded uniformly on to the container.

Research Disclosure No. 169, May 1978 entitled "Apparatus for heat sealing irregular surfaces" pages 84 and 85 discloses a heat sealing element for a packing machine comprising a sealing block having a heat exchanging passage formed therein, a fluid (liquefied metal), means for heating said fluid to a temperature within a predetermined range of temperature. The improvement resides in that the heat exchange passage comprises a groove formed in a surface of the sealing block and a flexible membrane secured to the sealing block in overlying fluid-tight relation to the groove.

European Patent Application EP—A1— 0 001 939 (published on 15.5.1979) discloses a heat sealing device for heat sealing lid stock to a downwardly sloping flange of a flanged container.

The present invention is particularly suitable for applying, by means of heat and pressure, lid stock to a downwardly sloping flange of a flanged container and provides a heat sealing element having advantageous features not present in prior constructions.

First, the heat sealing element of the present invention incorporates a sealing block having a heat exchanging groove in which heated fluid is contained and which is covered by a flexible membrane. A heat transfer passage is formed in the block communicating with the groove. This allows circulation of the fluid within the groove and passage so that repetitive operation of the sealing element results in a continuous redistribution of heat throughout the body of the fluid thus maintaining a uniform sealing temperature of the membrane. Furthermore, the flexible membrane is shaped such that uniform heat and pressure is applied progressively from an innermost to an outermost peripheral region of the container flange by direct contact with the lid stock.

Disclosure of the Invention

The invention provides a heat sealing element for applying lid stock to a downwardly sloping flange of a flanged container, said heat sealing element comprising a sealing block having a heat exchanging passage formed therein, said heat exchanging passage comprising an annular groove formed in a surface of said sealing block, a flexible membrane secured to said sealing block in overlying fluid-tight relationship with respect to said groove so that the membrane and groove together define an annular cavity in which a fluid is contained, heating means for heating said fluid to a temperature within a predetermined range of temperatures and a heat transfer passage formed in said sealing block and communicating with said groove so that said fluid can circulate between said groove and said heat transfer passage, characterized in that said flexible membrane is an annulus projecting outwardly of said surface and has a cross-sectional shape such as to form a yieldable structure for applying uniform heat and pressure progressively from the inner to the outer region of said flange through direct contact with said lid stock.

As the yieldable flexible membrane is brought into pressure applying heat exchanging contact with the lid stock, the membrane is adapted to engage and apply uniform pressure throughout the sealing area of the lid stock irrespective of irregularities in the configuration or surface area of the lid stock or of the cooperating sealing area of the container flange due to the fact that the membrane is flexible and may this conform to the configuration of the sealing area.

The heat transfer passage is formed in the sealing block and arranged in communication with the groove so that the application of sealing pressure by the flexible membrane effects a stirring or agitating action of the fluid whereby the membrane and fluid having given up heat during a sealing operation may be circulated within the heat transfer passage to a region therein adjacent the heater unit so that the temperature of the fluid is automatically regulated with the aid of the mechanical and hydraulic action on the fluid due to the performance of each sealing operation.

According to a feature of the invention a sealing block has a heat exchanging passage formed therein to which liquid is supplied from a separate liquid reservoir and a controlled heater unit via flexible conduits.

According to a preferred embodiment of the invention which is adapted for sealing flanged containers which are of circular configuration, the groove formed in the sealing block is circular and the flexible membrane is secured in overlying fluid tight relation to the groove formed in the sealing block by a pair of concentric rings which are secured to the sealing block by a plurality of screws which extend through the sealing membrane so as to grip the sealing membrane between the sealing rings and the surface of the sealing block in which the sealing groove is formed. Preferably the sealing membrane is configured so that the sealing portion thereof which is disposed between the clamping rings protrudes from the sealing block so as to form a doughnut shaped annular structure or so as to form an annular structure the lower portion of which is of a V-shaped cross-sectional configuration. If desired the membrane could be specially molded so as closely to conform with the shape of the sealing surface.

Brief Description of the Drawings

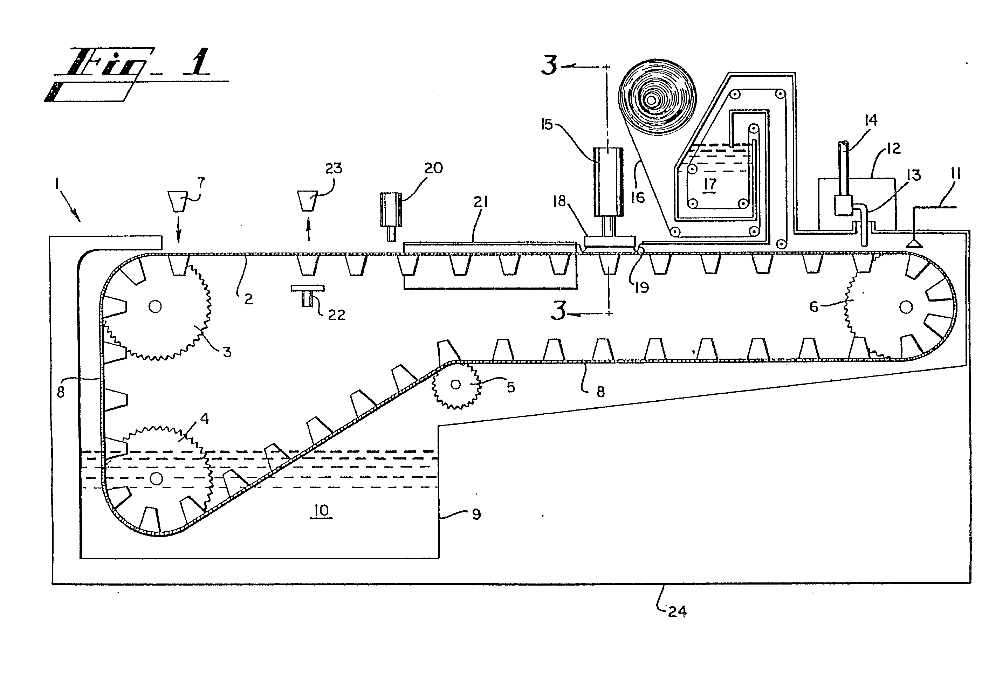

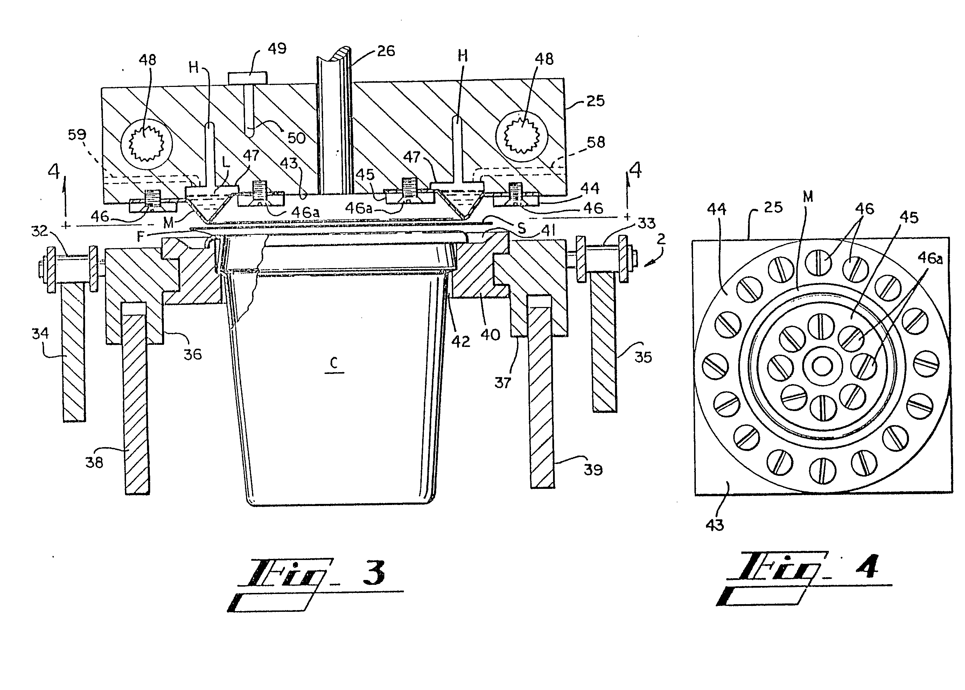

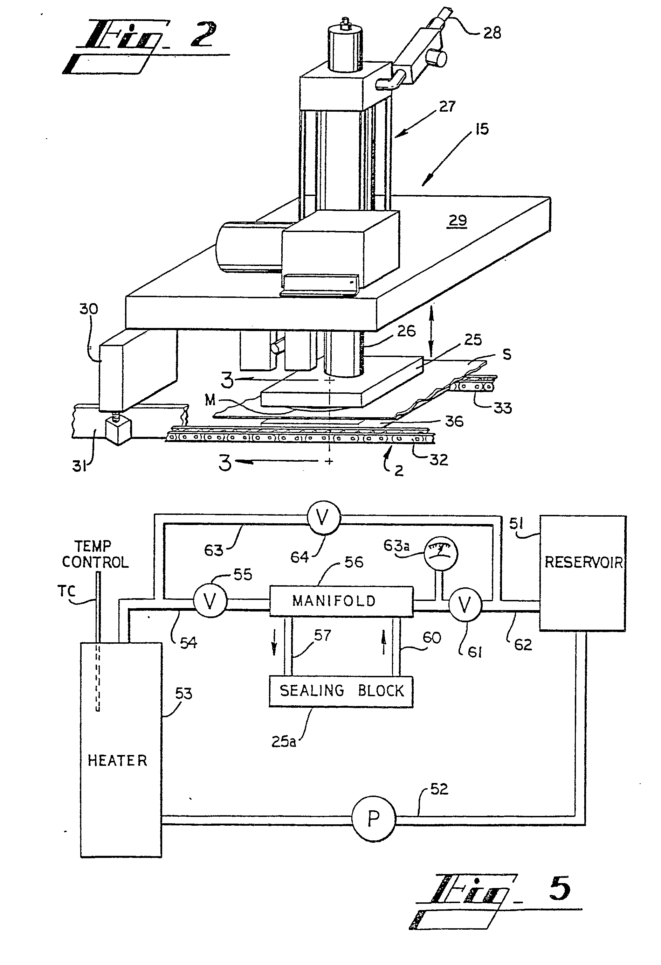

For a better understanding of the invention, reference may be had to the accompanying drawings in which Fig. 1 is a schematic representation of an aseptic packaging machine to which the sealing element of this invention is particularly well adapted; Fig. 2 is a perspective view of a sealing element formed according to one embodiment of this invention; Fig. 3 is a cross-sectional view of the arrangement shown in Fig. 2 which is taken along the line designated 3—3 in Fig. 1; Fig. 4 is a view from below taken along the line designated 4—4 in Fig. 3; and in which Fig. 5 is a schematic system view of a second embodiment of the invention.

Best Mode For Carrying Out the Invention

Referring to Fig. 1, the packaging apparatus is generally indicated by the numeral 1, and is fully enclosed by a hood or shroud which permits sealing of the interior thereof from outside ambient air, a feature which permits maintenance of sterile and inert atmospheric conditions inside the machine. Located inside the machine is a cup conveying means 2, which is composed of a series of orifice carrier plates connected together with chains to form an endless belt. The orifice carrier plates have holes which are shaped to conform to the shape of the preformed cups, which cups extend through the plate and are retained with the cup sealing flanges conforming to the shaped surfaces of the plates. The cup conveying means 2 passes around a series of drive and guide sprockets 3, 4, 5, and 6 so that the cup conveying means can move the cups through a sequence of machine operations as set forth below.

A supply of preformed cups is provided as indicated at 7, the cups being positively delivered into orifices in the carrier plates of the cup conveying means which carries the cups around guide sprocket 3 into a generally downward travel. Continuing downwardly and around sprocket 4, the cups are carried below the surface of a reservoir of liquid sterilant 10 continued in sterilant tank 9. As the cup conveying means travels around sprocket 4, the cups are turned to an inverted position. Cup retainer rail 8 is disposed along the path of travel of the cups through this portion of the machine to prevent cups from falling out of the orifice carrier plates, while inverted, by action of gravity. The arrangement of the cup travel through the sterilant tank or reservoir is such that the cups are completely flooded with the liquid sterilant and all traces of air are displaced therefrom to insure liquid contact over all internal surfaces of the cups. The supply of sterilant in tank 9 is maintained at a temperature in the range of 60°C to 100°C, and the speed of travel through the sterilant is such as to keep the cups immersed in the liquid for a period of one to sixty seconds. Fresh sterilant is supplied to tank 9 from a source outside the machine (not shown), and sterilant from the machine tank 9 is continuously recirculated through filtering and heating means (not shown) to maintain the temperature and cleanliness thereof.

Following passage through the sterilant bath, the cups travel upwardly out of the sterilant tank and around guide sprocket 5 and then generally horizontally to drive sprocket 6. Sterilant drains from the inverted cups during this portion of their travel through the machine. The entire inner atmosphere of the machine is an inert sterile gas such as nitrogen. If desired, jets of sterile inert gas may be directed inside the cups during this portion of their travel to sweep remaining traces of the liquid sterilant therefrom. Such gas jets 11 may also be directed to the sealing rim or flange areas of the cups to insure that such sealing areas are dry and free of liquid which might interfere with the later sealing operation.

Next, the cup conveying means travels around sprocket 6 turning the cups to an upright position, and then carries them to filler section 12. Here, filler nozzle 13 delivers a metered amount of food product into each cup, and nozzle 13 is supplied by conduit 14 with pre-sterilized food product. Filler 12 and its associated parts are designed to deliver food product into the cups without splashing of the food, and without contaminating the sealing flange or rim of the cups with particles or droplets of the food product.

The cup conveying means next carries the cups to a sealing station, indicated generally at 15. A supply web of cover material 16 is passed through a sterilant bath 17 and into proximity above the flanges of the cups. Sealer 15, operating heat sealing element 18, applies the cover material to the top of the filled cups and seals the cover material thereto by the action of heat and pressure. Reciprocating vertical movement of the sealing element 18 is permitted by flexible diaphragm 19 which separates the sealing element from the sterile and inert atmosphere of the interior of the machine.

If desired, the cover material may be cut to the desired shape of the cup and waste cover material can be stripped from the cups by die cutting and stripping means 20, the waste material, still interconnected, passing out of the machine and being wound into a roll for easy disposal. Alternatively, the cover web may be pre-cut into strands of interconnected covers prior to delivery to the machine, and, following the sealing operation, merely cut apart, thus eliminating any stripping of waste cover material from the filled and sealed cups. Note that cutting means 20 may be located immediately following sealing means 15, or may be spaced therefrom and follow after cups have moved past a microbiological barrier 21. This barrier may suitably be a liquid sterilant curtain, which separates the interior, sterile part of the machine from the ambient air.

The cup conveying means next carries the finished cups to an ejection mechanism indicated at 22 where cups are displaced from the cup conveying means and removed from the machine as indicated at 23. Thereafter, the cup conveying means completes its travel and returns to cup supply means 7. While details are not shown, drive means for the cup conveying means may be conveniently located in the lower portion of the machine as indicated at 24. Motion of the cup conveying means is intermittent and is synchronized with the operation of filler means 12, sealing means 15, and cutting and stripping means 20.

According to this invention and as shown in Figs. 2 and 3, sealing element 15 includes a sealing block 25 supported by vertically reciprocable plunger 26 whose up and down motion is imparted by means of fluid motor 27. This fluid motor comprises a piston and cylinder mechanism of known construction which is operated by a source of air or liquid under pressure not shown in the drawings which is interconnected with the fluid motor 27 via conduit 28. Fluid motor 27 is supported by plate 29 which in turn is mounted on support blocks 30 secured to the frame 31 of the machine. If desired some other known mechanical drive could be used instead of fluid motor 27.

As is best shown in Fig. 3, cup conveying means generally designated by the numeral 2 comprises a pair of chains 32 and 33 supported by guide rails 34 and 35. Interposed between and supported by chains 32 and 33 are slide blocks 36 and 37 which are slidable along rails 38 and 39 respectively. Interposed between slide blocks 36 and 37 are a purality of cup retaining apertured carrier plates 40 each of which is provided along its upper surface with a recess 41.

Thus a cup 7 such as is indicated at C in Fig. 3 is disposed in the opening 42 in carrier plate 40 with the flange F of the container C disposed in the recess 41. The lid stock from which the closure for the container C is formed is indicated at S in Fig. 3.

It is thus apparent that downward motion of the sealing block 25 imparted by fluid motor 27 causes the lid stock S to be moved into pressure contact with flange F of container C.

According to this invention, a flexible sealing membrane M which preferably is about three mils thick is secured to the lower surface 43 of sealing block 25 by a pair of retaining elements 44 and 45. These seal retaining elements 44 and 45 are secured to the sealing block 25 by screws 46 and 46a so as to form a fluid tight junction between the membrane M and the sealing block 25 so that liquid L disposed within the annular groove 47 is secured in fluid tight relation therein. Thus the groove or passage 47 constitutes a heat exchanging passage which is illustrated in Fig. 3 is in the form of a groove 47 formed in surface 43 of sealing block 25.

Preferably the peripheral configuration of the flexible and resilient sealing membrane M corresponds to the flanged opening of the article and is shaped so as to apply uniform sealing pressure to the flange. Thus for cups having a downwardly sloping flange, the membrane may be of V-shaped contour and positioned so that it will apply sealing pressure progressively from the inner to the outer region of the sloping flange as the membrane is moved downwardly into sealing contact. The material used to form the membrane must be highly resistant to heat and be adaptable to being permanently shaped in a desired configuration.

Oil derived from petroleum may be used as the fluid L. Its temperature preferably is maintained in a range between 90°C and 300°C. For most applications of the invention the fluid L will be a liquid when at operating temperature. The invention is not limited to liquids however and the term "fluid" is intended to include other media, some of which are identified below. Whatever medium is employed should be capable of withstanding a temperature of 300°C without breakdown and should have high heat capacity and high thermal conductivity. Glycerol could be used as could a silicone oil produced by Dow Chemical Company and marketed as Dowtherm. Solder, mercury and an oil having metallic particles suspended therein could also be used. Such particles could be aluminum, copper, silver, iron and other metals. Wax and steam can also be used.

Arranged in communication with the heat exchanging passage 47 is an annular heat transfer passage H which also contains heated fluid.

For the purpose of applying heat to the sealing block 25 and in turn to the fluid L in heat exchanging passage 47 and in heat transfer passage H, a heater unit 48 is imbedded within the sealing block 25. Of course this heater unit could be ring shaped or could take the form of a plurality of heater units disposed about the body of sealing block 25. A temperature indicating element 49 preferably is arranged with its temperature sensing element 50 imbedded within a passage formed in sealing block 25 and preferably in close proximity to the lower surface 43 of block 25.

With the heat exchanging passage 47 and the heat transfer passage H filled with heated liquid such as oil, downward motion of the sealing block 25 and parts associated therewith applies heat and pressure to the lid stock S and effects a bond between the lid stock and the flange F of container C. Since the flange F of container C as indicated in Fig. 3 is downwardly bevelled and since the film of membrane M is flexible, it is apparent that the membrane M is well adapted to apply pressure and temperature to lid stock S and to the flange F which are uniform throughout the sealing area irrespective of variations in the configuration of the lid stock S or the flange F or in the surface areas to be sealed in contact with each other.

In addition the fact that heat transfer passage H is in direct communication with heat exchange passage 47 causes circulation of heated liquid within the passages 47 and H to cause a redistribution of the liquid so that heat given up from the liquid through the membrane M is replaced due to the proximity of liquid within heat transfer passage H to the heater means 48. By this means the repetitive operation of the sealing element results in a continuous redistribution of heat throughout the body of the liquid thus maintaining uniform sealing temperature of the sealing membrane M.

According to another feature of the invention, the lid stock is stretched somewhat during the sealing operation due to the fact that the membrane M by frictional engagement with the lid stock places the lid stock in tension about the downwardly bevelled flange F as is obvious from Fig. 3.

As shown in Fig. 3 the membrane M is of V-shaped cross-sectional configuration. It will be understood that the invention is not limited to this particular configuration but that for some applications of the invention other configurations are desirable such for example as arcuate stepped or other special cross-sectional configurations. The membrane M is preset in configuration as is desired for a particular application of the invention.

Instead of heating the liquid by heater elements such as 48 imbedded in the sealing block 25 as shown in Fig. 3, the liquid L supplied to the heat exchanging passage 47 and the heat transfer passage H may be heated by a unit which is separate and apart from the movable sealing block 25. Such an arrangement is indicated schematically in Fig. 5 in which a fluid reservoir 51 is connected by a conduit 52 and pump P with a heater 53 whose temperature is controlled by control device TC. Thus liquid is supplied through conduit 54 and valve 55 to manifold 56 from whence it is supplied through flexible conduit 57 to the sealing block schematically indicated at 25a. Of course connection of conduit 57 is by way of a suitable passageway indicated by dotted lines 58 in Fig. 3 to the heat exchanging passage 47 and the heat transfer passage H. Fluid from the sealing block 25 is returned via the passage indicated in dotted lines in Fig. 3 by the numeral 59 which in turn is connected with flexible conduit 60 to the manifold 56 and thence through valve 61 and conduit 62 to reservoir 51. If desired a suitable temperature gauge 63a may be arranged so as to monitor the operating conditions and supplemental control may be achieved by conduit 63 and valve 64.

While many materials may be used in the construction of the flexible membrane M, one suitable material is manufactured and sold by E.I. DuPont deNemours & Co., Wilmington, Delaware, under the trademark "Kapton" which is described as a polyimide film. Another suitable material is silicone rubber.

Of course the container 7 and the lid stock S may be formed of any known suitable plastic material and may take the form of laminated or other structures.

Industrial Applicability

While the sealing element and method according to this invention may be employed to perform a variety of sealing operations requiring hermetic gas and moisture proof seals, this invention is particularly well adapted for use in sealing containers used to package consumer items such as fruit juices, dessert puddings, yogurt, and many other similar items.

The embodiments of the invention in which an exclusive property or privilege is claimed are defined as follows:

**Claims**

1. A heat sealing element (15) for applying lid stock (S) to a downwardly sloping flange (F) of a flanged container (C), said heat sealing element comprising a sealing block (25) having a heat exchanging passage formed therein, said heat exchanging passage comprising an annular groove (47) formed in a surface (43) of said sealing block (25), a flexible membrane (M) secured to said sealing block in overlying fluid-tight relationship with respect to said groove so that the membrane and groove together define an annular cavity in which a fluid (L) is contained, heating means (48) for heating said fluid to a temperature within a predetermined range of temperatures and a heat transfer passage (H) formed in said sealing block and communicating with said groove so that said fluid can circulate between said groove and said heat transfer passage, characterized in that said flexible membrane (M) is an annulus projecting outwardly of said surface (43) and has a cross-sectional shape such as to form a yieldable structure for applying uniform heat and pressure progressively from the inner to the outer region of said flange through direct contact with said lid stock.

2. A heat sealing element according to claim 1, characterized in that the annulus is of V-shaped cross-section.

3. A heat sealing element according to claim 1 or claim 2, further characterized in that said membrane (M) is formed of polyimide film.

4. A heat sealing element according to any of the preceding claims, further characterized in that at least one heater unit (48) is embedded within said sealing block (25).

5. A heat sealing element according to any of the preceding claims, further characterized in that a temperature sensing element (50) is mounted on said sealing block and arranged to provide a visual indication of temperature.

6. A heat sealing element according to any of the preceding claims, further characterized in that said heat exchanging passage (47) is in communication with a liquid reservoir (51) remote from said sealing block and connected therewith by flexible conduit means (57, 60).

7. A heat sealing element according to claim 6, further characterized in that liquid (L) is supplied from said reservoir (51) to said heat exchanging passage (47) by pump means (P) and in that temperature controlled heater means (53) is arranged to control the temperature of said liquid (L).

8. A heat sealing element according to any of the preceding claims, further characterized in that said groove (47) is continuous and in that the portions of said membrane (M) adjacent the edges of said groove are arranged in sealed relation therewith by seal retaining elements (44, 45) tightly secured to said sealing block.

9. A heat sealing element according to any of the preceding claims, further characterized in that said groove (47) is circular in configuration and in that a pair of seal retaining elements (44, 45) of circular configuration are disposed in concentric relation to each other and on opposite sides of said groove (47) respectively and arranged to secure said membrane in fluid-tight relation to said sealing block (25).

10. An aseptic packaging machine (1) operable to move flanged containers (C) in sequence through a sterilizing bath (10) and thence to a filling station (14) whereat product to be packaged is supplied to each container, characterized in that said machine includes a heat sealing element according to any of the preceding claims for heat sealing sterilized lid stock (S) to each container.

## Patentansprüche

1. Heißversiegelungselement (15) zum Aufbringen von Deckelmaterial (S) auf einen nach unten geneigten Flansch (F) eines mit einem Flansch versehenen Behälters (C), mit einem Versiegelungsblock (25) mit einem darin angelegten Wärmeaustauschdurchgang, der als eine ringförmige Rinne (47) in einer Oberfläche (43) des Versiegelungsblocks (25) ausgebildet ist, einer flexiblen Membran (M), die die Rinne flüssigkeitsdicht abdeckend an dem Versiegelungsblock angebracht ist, so daß die Membran und die Rinne zusammen einen ringförmigen Hohlraum begrenzen, in dem eine Flüssigkeit (L) enthalten ist, Heizvorrichtungen (48) zum Erhitzen dieser Flüssigkeit auf eine Temperatur innerhalb eines vorbestimmten Temperaturbereichs und einem Wärmeübertragungsdurchgang (H), der sich im Versiegelungsblock befindet und mit der Rinne in Verbindung steht, so daß die Flüssigkeit zwischen der Rinne und dem Wärmeübertragungsdurchgang zirkulieren kann, dadurch gekennzeichnet, daß die flexible Membran (M) ein Ringraum ist, der von dieser Oberfläche (43) nach außen vorsteht und eine solche Querschnittsform hat, daß er eine nachgebende Struktur bildet, um durch direkten Kontakt mit dem Deckelmaterial gleichmäßige Wärme und gleichmäßigen Druck zunehmend von inneren zum äußeren Bereich des Flansches auszuüben.

2. Heißversiegelungselement nach Anspruch 1, dadurch gekennzeichnet, daß der Ringraum einen V-förmigen Querschnitt aufweist.

3. Heißversiegelungselement nach Anspruch 1 oder 2, dadurch gekennzeichnet, daß die Membran (M) aus Polyamid-Folie besteht.

4. Heißversiegelungselement nach einem der vorangegangenen Ansprüche, dadurch gekennzeichnet, daß wenigstens eine Heizinheit (48) innerhalb des Versiegelungsblockes (25) eingebettet ist.

5. Heißversiegelungselement nach einem der vorangegangenen Ansprüche, dadurch gekennzeichnet, daß ein Temperaturfühlungselement (50) auf dem Versiegelungsblock befestigt ist und mit einer Sichtanzeige für die Temperatur versehen ist.

6. Heißversiegelungselement nach einem der vorangegangenen Ansprüche, dadurch gekennzeichnet, daß der Wärmeaustauschdurchgang (47) in Verbindung mit einem Flüssigkeitsspeicher (51) steht, der entfernt vom Versiegelungsblock angeordnet und mit diesem durch flexible Leitungsvorrichtungen (57, 60) verbunden ist.

7. Heißversiegelungselement nach Anspruch 6, dadurch gekennzeichnet, daß Flüssigkeit (L) vom Speicher (51) zum Wärmeaustauschdurchgang (47) durch eine Pumpvorrichtung (P) geliefert wird, daß eine temperaturgesteuerte Heizvorrichtung (53) zum Steuern der Flüssigkeitstemperatur vorgesehen ist.

8. Heißversiegelungselement nach einem der vorangegangenen Ansprüche, dadurch gekennzeichnet, daß die Rinne (47) fortlaufend ist, und daß die Abschnitte der Membran (M) angrenzend an die Kanten dieser Rinne durch Abdicht-Halteelemente (44, 45), die am Versiegelungsblock befestigt sind, in abgedichteter Beziehung zu der Rinne angebracht sind.

9. Heißversiegelungselement nach einem der vorangegangenen Ansprüche, dadurch gekennzeichnet, daß die Rinne (47) in ihrer Gestalt kreisförmig ist, und daß ein Paar kreisförmiger Abdicht-Halteelemente (44, 45) in einem konzentrischen Verhältnis zueinander und an gegenüberliegenden Seiten der Rinne (47) angeordnet und so ausgebildet sind, daß sie die Membran flüssigkeitsdicht am Versiegelungsblock (25) festhalten.

10. Keimfreie Verpackungsmaschine (1) zum aufeinanderfolgenden Bewegen von Behältern (C) mit Flansch durch ein Sterilisierbad (10) und von dort zu einer Füllstelle (14), an der zuverpackendes Erzeugnis jedem Behälter zugeführt wird, dadurch gekennzeichnet, daß diese Maschine ein Heißversiegelungselement nach einem der vorangegangenen Ansprüche für das Heißaufsiegeln sterilisierten Deckelmaterials (S) auf jeden Behälter aufweist.

**Revendications**

1. Elément de thermosoudage (15) pour l'application de matière de couvercle (S) à un rebord incliné vers le bas (F) d'un récipient à rebord (C), cet élément de thermosoudage comprenant un bloc de soudage (25) dans lequel est formé un passage d'échange de chaleur, ce passage d'échange de chaleur comprenant une gorge annulaire (47) formée dans une surface (43) du bloc de soudage (25), une membrane flexible (M) fixée au bloc de soudage dans une position de recouvrement étanche relativement à la gorge, de sorte que la membrane et la gorge définissent ensemble une cavité annulaire dans laquelle est contenu un liquide (L), des moyens de chauffage (48) pour chauffer ce liquide à une température se situant dans un intervalle prédéterminé de température et un passage de transfert de chaleur (H) formé dans le bloc de soudage et communiquant avec la gorge, de sorte que le liquide peut circuler entre la gorge et le passage de transfert de chaleur, caractérisé par le fait que la membrane flexible (M) est un anneau dépassant à l'extérieur de la surface (43) et présente une forme de section telle qu'elle forme une structure souple pour appliquer une chaleur et une pression uniformes, progressivement de la région intérieure à la région extérieure du rebord, par contact direct avec la matière de couvercle.

2. Elément de thermosoudage selon la revendication 1, caractérisé par le fait que l'anneau a une section en V.

3. Elément de thermosoudage selon l'une ou l'autre des revendications 1 ou 2, caractérisé par le fait que la membrane (M) est formée d'une feuille mince de polyimide.

4. Elément de thermosoudage selon l'une quelconque des revendications 1 à 3, caractérisé par le fait qu'au moins une unité chauffante (48) est noyée à l'intérieur du bloc de soudage (25).

5. Elément de thermosoudage selon l'une quelconque des revendications 1 à 4, caractérisé par le fait qu'un élément capteur de température (50) est monté sur le bloc de soudage et conçu pour fournir une indication visuelle de température.

6. Elément de thermosoudage selon l'une quelconque des revendications 1 à 5, caractérisé par le fait que le passage d'échange de chaleur (47) est en communication avec un réservoir à liquide (51) éloigné du bloc de soudage et relié à celui-ci par des conduits flexibles (57, 60).

7. Elément de thermosoudage selon la revendication 6, caractérisé par le fait que du liquide (L) est amené du réservoir (51) au passage d'échange de chaleur (47) par un moyen de pompage (P) et qu'en moyen de chauffage à température réglée (53) est conçu pour régler la température du liquide (L).

8. Elément de thermosoudage selon l'une quelconque des revendications 1 à 7, caractérisé par le fait que la gorge (47) est continue et que les parties de la membrane (M) qui sont adjacentes aux bords de la gorge sont disposées de façon étanche relativement à celle-ci par des éléments de retenue de joint (44, 45) fixés de façon serrée au bloc de soudage.

9. Elément de thermosoudage selon l'une quelconque des revendications 1 à 8, caractérisé par le fait que la gorge (47) est de configuration circulaire et qu'une paire d'éléments de retenue de joint (44, 45) de configuration circulaire sont disposés concentriquement l'un à l'autre et respectivement sur des côtés opposés de la gorge (47) et conçus pour fixer la membrane en position d'étanchéité relativement au bloc de soudage (25).

10. Machine d'emballage aseptique (1) capable de faire passer successivement des récipients à rébord (C) à travers un bain stérilisant (10) et, ensuite, de les amener à un poste de remplissage (14) où du produit à emballer est fourni à chaque récipient, caractérisée par le fait que cette machine comprend un élément de thermosoudage selon l'une quelconque des revendications 1 à 9, pour thermosouder de la matière de couvercle stérilisée (S) à chaque récipient.

Fig. 1

0 008 870

Fig. 4

Fig. 3

Fig_ 2

Fig_ 5